# EUROPÄISCHE PATENTSCHRIFT

(11) **EP 1 650 467 B1**
(45) Veröffentlichungstag und Bekanntmachung des Hinweises auf die Patenterteilung: **21.11.2007**
(21) Anmeldenummer: 05021112.7
(22) Anmeldetag: 28.09.2005
(51) Int. Cl.: F16F 9/32, B21D 26/14

(54) **Schwingungsdämpfer**
Vibration damper
Amortisseur de vibrations

(30) Priorität: 22.10.2004 DE 102004051731
(43) Veröffentlichungstag der Anmeldung: 26.04.2006
(73) Patentinhaber: ZF FRIEDRICHSHAFEN AG, 88046 Friedrichshafen (DE)
(72) Erfinder: Rölleke, Hartmut, 57635 Kirchleib (DE); Baalmann, Helmut, 97493 Bergrheinfeld (DE); Bies, Herbert, 53501 Vettelhoven (DE); Gonschorrek, Hans, 97493 Bergrheinfeld (DE); Hochgesang, Stefan, 97618 Strahlungen (DE); Lichtlein, Oswald, 97241 Bertheim (DE); Vockentänzer, Norbert, 97456 Dittelbrunn (DE); Zietsch, Andreas, 97532 Üchtelhausen-Zell (DE)

(56) Entgegenhaltungen:
- DE-C1- 19 855 974
- US-A- 3 222 771
- US-A- 3 590 464

## Beschreibung

Die Erfindung betrifft einen Schwingungsdämpfer gemäß dem Oberbegriff von Patentanspruch 1.

In der Standardbauweise umfasst ein Schwingungsdämpfer eine axial bewegliche Kolbenstange, an der ein Kolben befestigt wird. An der Kolbenstange ist eine Anschlagfläche ausgeführt, an der sich der Kolben axial abstützt. Eine Kolbenmutter fixiert den Kolben, wobei zwischen der Kolbenstange und der Kolbenmutter ein Befestigungsgewinde vorliegt.

Die Dämpfkraft des Schwingungsdämpfers ist abhängig von der Verdrängerbewegung des Kolbens und der Kolbenstange. Tritt der Fall ein, dass sich der Kolben von der Kolbenstange löst, dann hätte das für die Fahrsicherheit erhebliche Konsequenzen. Deshalb sind zahlreiche Methoden zur Sicherung des Kolbens auf der Kolbenstange bekannt. Sehr häufig wird das Gewinde mit einem als Klebstoff wirksamen aushärtbare Kunststoff versehen. Eine alternative Methode wird in der DE 34 29 473 A1 beschrieben. Es werden bewusst voneinander abweichende Gewindeabmessungen an der Kolbenstange und an der Kolbenmutter vorgenommen, die deutlich höhere Reibungskräfte in den Gewindegängen mit sich bringen und dadurch die Gefahr der selbsttätigen Lockerung der Kolbenmutter verhindern.

Ein weitere Methode wird in der DE 101 61 801 A1 beschrieben. Man drückt ein Verstemmwerkzeug radial in die Kolbenmutter und verdrängt kleine Volumenanteile der Kolbenmutter plastisch in das Befestigungsgewinde der Kolbenstange.

Man könnte natürlich auch ganz auf ein Befestigungsgewinde verzichten und entsprechend der DE 198 55 974 C1 anstelle einer Kolbenmutter einen Schließring verwenden, der durch ein Umformwerkzeug in ein Rillenprofil der Kolbenstange plastisch verformt wird, wodurch sich die gesamte Problematik gar nicht erst auftreten würde. Das Rillenprofil der Kolbenstange muss eine bestimmte Mindesttiefe aufweisen. Insbesondere bei Kolbenstangen mit einem sehr kleinen Durchmesser wird dann jedoch u. U. ein tragender Querschnitt erreicht, der an die Grenze der Bauteilfestigkeit reicht.

Die US 3 222 771 offenbart ein Verfahren zur Herstellung einer Formschlussverbindung, in dem ein ringförmiges Befestigungselement mittels Magnetkraft auf ein profiliertes Bauteil verformt wird.

Aufgabe der vorliegenden Erfindung ist es, eine Kolbensicherung für eine Kolbenmutter an einer Kolbenstange zu realisieren, die einerseits leicht herstellbar, aber bei Bedarf auch wieder gelöst werden kann.

Erfindungsgemäß wird die Aufgabe dadurch gelöst, dass der Kolben der Kolbenbaugruppe mittels einer Kolbenmutter auf einem Befestigungsgewinde der Kolbenstange fixiert und das ringförmige Befestigungsmittel der Kolbenmutter zusätzlich beigeordnet wird, wobei auf das Befestigungsmittel eine radial wirkende Magnetkraft F_{M} ausgeübt wird, die die Deformation des Befestigungsmittels bewirkt.

Ein wesentlicher Vorteil im Vergleich zu einem Verstemmwerkzeug zur Herstellung der Formschlussverbindung besteht darin, dass kein Werkzeug direkt in den Bauraum der Kolbenbaugruppe eingeführt werden muss. Dadurch liegen auch keine besonderen Anforderungen hinsichtlich der Positionierung der Kolbenbaugruppe zu der Magnetkraft erzeugenden Einrichtung vor. Es spielt keine Rolle, ob die Kolbenstange wenige Zehntelmillimeter falsch positioniert ist oder nicht. Bei einem Verstemmwerkzeug sind derartige Toleranzbereiche nicht mehr akzeptabel.

Man kann eine bereits eingeführte Kolbenbefestigung beibehalten und das Befestigungsmittel als ein Zusatzelement einführen, ohne dass der bisherige Montageablauf vollständig neugeordnet werden muss.

Die Kolbenstange kann zusätzlich zum Befestigungsgewinde mit mindestens einer axial verlaufenden Nut versehen werden, die mit dem Befestigungsmittel eine Formschlussverbindung eingeht.

Zusätzlich kann das ringförmige Befestigungsmittel axial gegen die Kolbenmutter vorgespannt werden. Mit dieser Maßnahme soll die Reibung zwischen dem kolbenstangenseitigen Befestigungsgewinde und einem dem Befestigungsmittel, das ebenfalls ein Innengewinde aufweist, gesteigert werden.

Des weiteren kann eine der Kontaktflächen zwischen der Kolbenmutter und dem Befestigungsmittel mit einer Profilierung versehen werden, in die Volumenanteile des jeweils anderen Kontaktbauteils verdrängt werden. Mit dieser vorteilhaften Ausgestaltung werden die Kolbenmutter und das ringförmige Befestigungsmittel in Umfangsrichtung miteinander verbunden, so dass die Kolbenmutter zusätzlich gegen eine Losdrehbewegung gesichert ist.

Unabhängig von der Kolbenbefestigung kann mindestens eine Ventilscheibe der Kolbenbaugruppe von einer Feder vorgespannt werden, die sich auf einem Federteller abstützt, der durch eine radial wirkenden Magnetkraft auf der Kolbenstange fixiert wird. Damit ist es möglich, die Federkraft der Feder stufenlos einzustellen.

Anhand der folgenden Figurenbeschreibung soll die Erfindung näher erläutert werden.

Es zeigt:
- Fig. 1: Prinzipieller Aufbau eines Schwingungsdämpfers
- Fig. 2: Kolben des Schwingungsdämpfers als Einzelteil

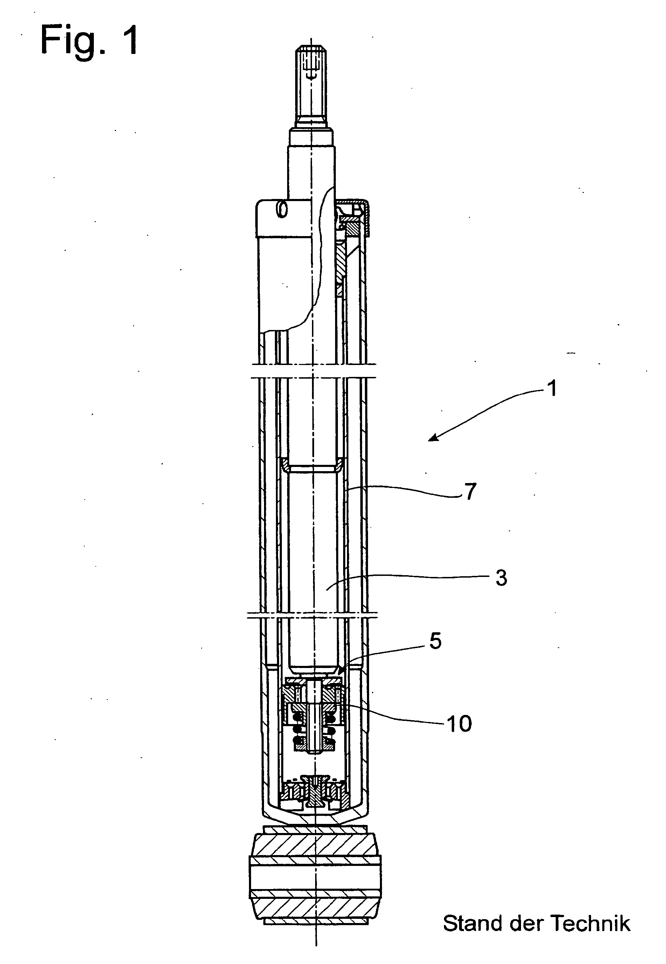

Die Fig. 1 zeigt einen an sich aus dem Stand der Technik bekannten Schwingungsdämpfer 1, der eine Kolbenstange 3 mit einer Kolbenbaugruppe 5 aufweist, die als Baueinheit innerhalb eines Zylinders 7 axial verschiebbar angeordnet ist. Ein Kolben der Kolbenbaugruppe 5 wird von einer Kolbenmutter 10 an der Kolbenstange 3 axial fixiert.

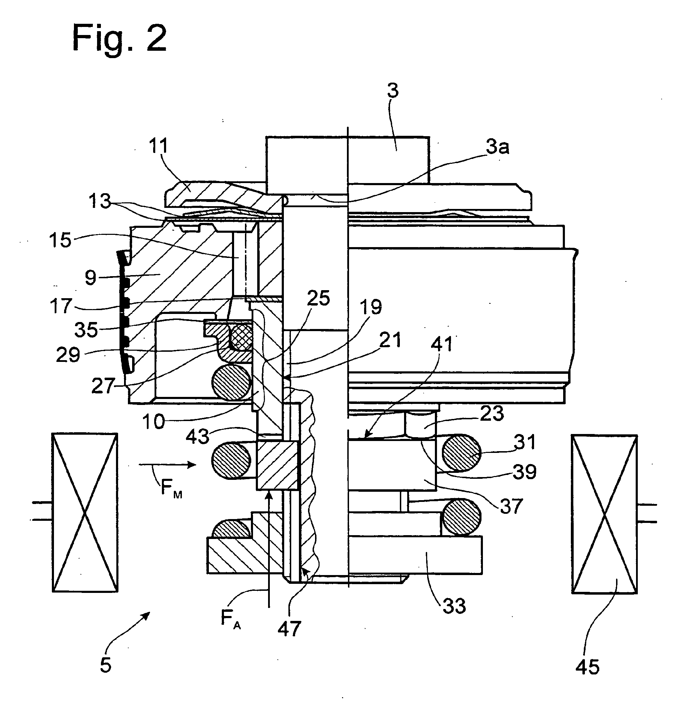

Die Fig. 2 beschränkt sich auf ein zapfenförmiges Ende der Kolbenstange 3 mit der Kolbenbaugruppe 5. Der Kolben 9 verfügt über eine Anschlagscheibe 11 für eine Anzahl von Ventilscheiben 13, die den Durchfluss durch mindestens einen Strömungskanal 15 beeinflussen. Des weiteren ist eine Drosselscheibe 17 beigefügt, die den wirksamen Querschnitt des mindestens einen Strömungskanals 15 bestimmt. Dieser geschichtete Teileverband wird von der Kolbenmutter 10 axial fixiert, indem ein Befestigungsgewinde 19 der Kolbenstange mit einem Gegengewinde 21 der Kolbenmutter in Eingriff steht. Die Kolbenmutter verfügt über einen Abschnitt mit Schlüsselflächen 23. Diesem Abschnitt schließt sich ein Führungsabschnitt 25 an, der auf seiner Mantelfläche einen Dichtungsring 27 in Verbindung mit einem Stützring 29 führt. Der Stützring wird von einer Feder 31 in Verbindung mit einem Federteller 33 gegen eine Voröffnungsscheibe 35 gespannt. Die Voröffnungsscheibe kann sich zusammen mit dem Dichtungsring 27 und dem Stützring entlang dem Führungsabschnitt gegen die Kraft der Feder 31 bewegen, wenn ein entsprechender Druck im Strömungskanal 15 ansteht. Die Länge des Führungsabschnitts ist größer als der maximale Abhubweg der Voröffnungsscheibe 35.

Bei der Montage werden die Anschlagscheibe 11, die Ventilscheiben 13, der Kolben 9, die Drosselscheibe 17 auf das zapfenförmige Ende der Kolbenstange 3 gefädelt. In einer Vorrichtung wird der Kolben axial gegen einen Absatz 3a der Kolbenstange vorgespannt. Anschließend schraubt man die Kolbenmutter 10 mit einer definierten Vorspannung gegen den Kolben 5. Danach wird ein ringförmiges Befestigungsmittel 37 auf die Kolbenstange 3 gefügt. Das Befestigungsmittel kann auch geschraubt sein, kann aber auch ohne Gewinde mit nur einem sehr kleinen Spiel zum Befestigungsgewinde 19 aufgeschoben sein . Eine der Kontaktflächen 39; 41 zwischen der Kolbenmutter 10 und dem ringförmigen Befestigungsmittel 37, in diesem Ausführungsbeispiel die Kolbenmutter 10 , ist mit einer Profilierung 43 versehen. Im weiteren Montageablauf wird der Bereich der Kolbenbaugruppe 5, in dem das ringförmigen Befestigungsmittel 37 angeordnet ist, von einer Magnetspule 45 eingehüllt, die ein Magnetfeld mit der nach innen radial gerichteten Magnetkraft FM erzeugt. Die Magnetkraft FM ist so groß, dass eine Deformation des gesamten ringförmigen Befestigungsmittels 37 bewirkt wird, die eine Formschlussverbindung mit dem Befestigungsgewinde 19 der Kolbenstange herstellt. Zusätzlich zum Befestigungsgewinde kann die Kolbenstange noch mit mindestens einer axial verlaufenden Nut 47 versehen sein, die mit dem Befestigungsmittel eine Formschlussverbindung eingeht, die gegen eine Losdrehbewegung des Befestigungsmittels wirkt.

Gleichzeitig kann das ringförmige Befestigungsmittel mit der Kraft F_{A} axial gegen die Kolbenmutter vorgespannt sein. Im Zusammenhang mit der Magnetkraft F_{M} wird bei der Deformation des ringförmigen Befestigungsmittels 37 die Profilierung 43 in der Kontaktfläche der Kolbenmutter 10 mit verdrängten Volumenteilen des ringförmigen Befestigungsmittels 37 gefüllt, so dass eine weitere Formschlussverbindung vorliegt, die die Kolbenmutter 10 mit dem ringförmigen Befestigungsmittel 37 verbindet.

Zusätzlich oder unabhängig von der Art der Befestigung des Kolbens 10 kann anstelle einer Einstellmutter als Federteller 33 auch ein ringförmiges Befestigungsmittel 37 eingesetzt werden, das ebenfalls durch eine radial wirkende Magnetkraft F_{M} auf der Kolbenstange 5 fixiert wird.

## Patentansprüche

1. Verfahren zur Herstellung eines Schwingungsdämpfers (1) mit einer Kolbenstange (3), an der eine Kolbenbaugruppe (5) mit einem ringförmigen Befestigungsmittel (37) fixiert wird, indem zwischen dem ringförmigen Befestigungsmittel (37) und der Kolbenstange (3) eine Formschlussverbindung durch eine Deformation des Befestigungsmittels (37) erreicht wird,
**dadurch gekennzeichnet,**
**dass** der Kolben (9) der Kolbenbaugruppe (5) mittels einer Kolbenmutter (10) auf einem Befestigungsgewinde (19) der Kolbenstange (3) fixiert und das ringförmige Befestigungsmittel (37) der Kolbenmutter (10) zusätzlich beigeordnet wird, wobei auf das Befestigungsmittel (37) eine radial wirkende Magnetkraft F_{M} ausgeübt wird, die die Deformation des Befestigungsmittels (37) bewirkt.

2. Verfahren nach Anspruch 1,
**dadurch gekennzeichnet,**
**dass** das Befestigungsgewinde (19) mit mindestens einer axial verlaufenden Nut (47) versehen wird, die mit dem Befestigungsmittel (37) eine Formschlussverbindung eingeht.

3. Verfahren nach Anspruch 2,
**dadurch gekennzeichnet,**
**dass** das ringförmige Befestigungsmittel (37) axial gegen die Kolbenmutter (10) vorgespannt wird.

4. Verfahren nach Anspruch 3,
**dadurch gekennzeichnet,**
**dass** eine der Kontaktflächen (39; 41) zwischen der Kolbenmutter (10) und dem Befestigungsmittel (37) mit einer Profilierung (43) versehen wird, in die Volumenanteile des jeweils anderen Kontaktbauteils (39; 41) verdrängt werden.

5. Verfahren nach Anspruch 1,
**dadurch gekennzeichnet,**
**dass** mindestens eine Ventilscheibe (29) der Kolbenbaugruppe (5) von einer Feder (31) vorgespannt wird, die sich auf einem Federteller (33) abstützt, der durch eine radial wirkenden Magnetkraft F_{M} auf der Kolbenstange (3) fixiert wird.

## Claims

1. Method for producing a vibration damper (1) with a piston rod (3) to which a piston assembly (5) is fixed with an annular fixing means (37), a positive connection between the annular fixing means (37) and the piston rod (3) being obtained by deformation of the fixing means (37), **characterized in that** the piston (9) of the piston assembly (5) is fixed on a fixing thread (19) of the piston rod (3) by means of a piston nut (10) and the annular fixing means (37) is additionally associated with the piston nut (10), a radially acting magnetic force F_{M} which causes the deformation of the fixing means (37) being exerted on the fixing means (37).

2. Method according to Claim 1, **characterized in that** the fixing thread (19) is provided with at least one axially disposed groove (47) which produces a positive connection with the fixing means (37).

3. Method according to Claim 2, **characterized in that** the annular fixing means (37) is preloaded axially against the piston nut (10).

4. Method according to Claim 3, **characterized in that** one of the contact faces (39; 41) between the piston nut (10) and the fixing means (37) is provided with a profiling (43) into which volume portions of the respective other contact component (39; 41) are displaced.

5. Method according to Claim 1, **characterized in that** at least one valve disc (29) of the piston assembly (5) is preloaded by a spring (31) which is supported on a spring collar (33) which is fixed on the piston rod (3) by a radially acting magnetic force F_{M}.

## Revendications

1. Procédé de fabrication d'un amortisseur de vibrations (1) doté d'une tige de piston (3) sur laquelle un ensemble de piston (5) est immobilisé par un moyen de fixation annulaire (37), par le fait qu'on obtient une liaison positive entre le moyen de fixation annulaire (37) et la tige de piston (3) par une déformation du moyen de fixation (37),
**caractérisé en ce que** le piston (9) de l'ensemble de piston (5) est immobilisé au moyen d'un écrou de piston (10) sur un filetage de fixation (19) de la tige de piston (3), et le moyen de fixation annulaire (37) est en outre associé à l'écrou de piston (10), sachant qu'une force magnétique F_{M} agissant radialement, qui produit la déformation du moyen de fixation (37), est exercée sur le moyen de fixation (37).

2. Procédé selon la revendication 1, **caractérisé en ce que** le filetage de fixation (19) est pourvu d'au moins une rainure (47) s'étendant axialement, qui entre en liaison positive avec le moyen de fixation (37).

3. Procédé selon la revendication 2, **caractérisé en ce que** le moyen de fixation annulaire (37) est précontraint axialement contre l'écrou de piston (10).

4. Procédé selon la revendication 3, **caractérisé en ce qu'**une des surfaces de contact (39 ; 41) entre l'écrou de piston (10) et le moyen de fixation annulaire (37) est pourvue d'un profilage (43) dans lequel sont repoussées des parties du volume de l'autre élément de contact respectif (39 ; 41).

5. Procédé selon la revendication 1, **caractérisé en ce qu'**au moins un disque de soupape (29) de l'ensemble de piston (5) est précontraint par un ressort (31) qui s'appuie sur une coupelle de ressort (33) qui est immobilisée sur la tige de piston (3) par une force magnétique F_{M} agissant radialement.
